# EUROPÄISCHE PATENTANMELDUNG

(11) **EP 3 412 428 A1**
(43) Veröffentlichungstag der Anmeldung: **12.12.2018**
(21) Anmeldenummer: 18180375.0
(22) Anmeldetag: 25.11.2009
(51) Int. Cl.: B29C 49/48, B29C 49/42, B67C 3/14, B29C 49/06, B29C 49/12, B29C 49/58

(54) **VORRICHTUNG UND VERFAHREN ZUM HERSTELLEN VON KUNSTSTOFFBEHÄLTNISSEN UND NACH DIESEM VERFAHREN HERGESTELLTES KUNSTSTOFFBEHÄLTNIS**

(30) Priorität: 28.11.2008 DE 102008059624
(62) Teilanmeldung aus: 09763922.3
(71) Anmelder: Krones AG, 93073 Neutraubling (DE)
(72) Erfinder: Knapp, Peter, 93073 Neutraubling (DE)
(74) Vertreter: Bittner, Bernhard

(57) **Zusammenfassung**

Die Erfindung betrifft eine Vorrichtung zum Umformen von Kunststoffvorformlingen zu Kunststoffbehältnissen mit einer Blasform (2), welche einen Hohlraum (4) aufweist, innerhalb dessen ein Kunststoffvorformling zu einem Kunststoffbehältnis umformbar ist, wobei die Blasform (2) ein Bodenteil (6) zur Ausbildung eines Bodenabschnitts (10c) des Behältnisses (10) aufweist, wobei dieses Bodenteil den Hohlraum (4) begrenzt, mit einer Einfülleinrichtung, um dem Kunststoffvorformling (10) über seine Mündung ein gasförmiges Medium zuzuführen, um den Kunststoffvorformling im Inneren der Blasform (2) zu expandieren, mit einem Stangenförmigen Körper (15), der gegenüber der Blasform (2) bewegbar ist, um den Kunststoffvorformling (10) während des Umformvorgangs zu dehnen, wobei das Bodenteil (6) einen den Hohlraum (4) begrenzenden Ausbildungsabschnitt (12) aufweist, der zur Ausbildung des Bodenabschnitts (10c) des Behältnisses dient und der an eine Gestalt der Bodenabschnitts (10c) des gefertigten Behältnisses (10) angepasst ist und der Ausbildungsabschnitt (18) in einem zentralen Bereich (Z) einen sich in Richtung des Hohlraums (4) erstreckenden Vorsprung (14) aufweist.

## Beschreibung

Die vorliegende Erfindung bezieht sich auf eine Vorrichtung zum Herstellen von Kunststoffbehältnissen und insbesondere auf eine Vorrichtung zum Umformen von Kunststoffvorformlingen zu Kunststoffbehältnissen. Daneben ist die Erfindung auch auf ein entsprechendes Herstellungsverfahren für Kunststoffbehältnisse gerichtet, sowie auf nach einem solchen Verfahren hergestellte Kunststoffbehältnisse.

Aus dem Stand der Technik sind seit langem diverse Vorrichtungen und Verfahren zum Umformen von Kunststoffvorformlingen zu Kunststoffbehältnissen bekannt. Dabei ist es im Stand der Technik üblich, diese Kunststoffvorformlinge zunächst durch einen Blasumformungsvorgang zu erzeugen und anschließend mit einer Flüssigkeit, insbesondere einem Getränk, zu befüllen. Auch für diesen Befüllungsvorgang sind verschiedene Varianten denkbar. So ist beispielsweise eine sogenannte Kaltabfüllung möglich, bei der insbesondere von Relevanz ist, dass die hergestellten Behältnisse druckbeständig sind. Weiterhin ist aus dem Stand der Technik ein Verfahren zur Heißabfüllung bekannt, d.h. bei diesem Verfahren werden die Getränke in einem stark erwärmten Zustand in das Behältnis eingefüllt. Bei diesem Verfahren müssen die Behältnisse vakuumbeständig sein, da sich beim Abkühlen der Flaschen das Volumen verringert. Diese Volumenverringerung muss die Flasche kompensieren können. Dabei sind üblicherweise bei dieser Art der Abfüllung die Flaschengewichte des Vorformlings höher als bei der Kaltabfüllung.

Aus der US 4,276,987 ist ein Hohlkörper bekannt, der aus einem thermoplastischen Material hergestellt ist. Die EP 0 224 128 beschreibt blasgeformte Behälter. Dabei ist ein Zentralbereich dieser Behälter mit einer Ausnehmung versehen, die durch eine Umfangswand und Bodenwand ausgebildet wird.

Bei einem intern von der Anmelderin verwendeten Verfahren werden die Behältnisse mit beispielsweise 85° C heißem Medium befüllt, anschließend mit Stickstoff beaufschlagt und verschlossen. Sofort nach dem Verschießen baut sich in der Flasche Druck auf. Dabei muss einerseits gewährleistet sein, dass sich während der Befüllphase mit heißem Medium das Behältnis nicht verformt und nach dem Verschließen sollte das Behältnis einen Druck bis zu beispielsweise 2 bar kompensieren können. Hierbei entsteht jedoch nach dem Stand der Technik das Problem, dass es zu einem Ausbuchten des Bodens kommen kann, wodurch sich die Bodenfreiheit, die an sich in dem Behältnis besteht, deutlich verringert, was wiederum dazu führen kann, dass das Behältnis schief steht bzw. wackelt.

Der vorliegenden Erfindung liegt daher die Aufgabe zu Grunde, Vorrichtungen und Verfahren zum Herstellen von Kunststoffbehältnissen zur Verfügung zu stellen, welche eine anschließende Heißbefüllung des Behältnisses vereinfachen.

Dies wird erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist eine Blasform auf, die wiederum einen Hohlraum mit einer dem Kunststoffbehältnis zugewandten Innenwandung ausbildet, innerhalb dessen ein Kunststoffvorformling zu einem Kunststoffbehältnis umformbar ist. Dabei weist die Blasform ein Bodenteil zur Ausbildung eines Bodenabschnitts des Behältnisses auf, wobei dieses Bodenteil den Hohlraum begrenzt. Weiterhin weist die Vorrichtung eine Einfülleinrichtung auf, um dem Kunststoffvorformling über seine Mündung ein gasförmiges Medium zuzuführen um den Kunststoffvorformling im inneren der Blasform zu expandieren. Weiterhin weist die Blasform einen stangenförmigen Körper auf, der gegenüber der Blasform bewegbar ist, um den Kunststoffvorformling während des Formvorgangs zu dehnen. Bei der Einfülleinrichtung kann es sich beispielsweise um eine Blasdüse handeln, welche an die Mündung des Behältnisses angelegt wird, um das Behältnis mit dem gasförmigen Medium zu beaufschlagen.

Erfindungsgemäß weist das Bodenteil einen den Hohlraum begrenzenden und einen Teil der Innenwandung bildenden Ausbildungsabschnitt auf, der zur Ausbildung der Bodenfläche des Behältnisses dient und der an eine geometrische Gestalt der Bodenfläche des gefertigten Behältnisses angepasst ist. Weiterhin weist das Bodenteil in einem zentralen Bereich einen sich in Richtung des Hohlraums erstreckenden Vorsprung auf, wobei die dem Kunststoffbehältnis zugewandte Innenwandung wenigstens abschnittsweise beheizbar bzw. erwärmbar ist. Insbesondere sind dabei zumindest die Seitenteile der Blasform erwärmbar. Das Bodenteil kann ebenso erwärmbar sein, es wäre jedoch auch möglich, dass das Bodenteil nicht erwärmbar ist oder sogar gekühlt wird. Allgemein ist daher die genannte Innenwandung wenigstens abschnittsweise temperierbar.

Bevorzugt ist dieser Vorsprung derart angeordnet, dass er während eines Expansionsvorgangs wenigstens zeitweise an einem Anspritzpunkt des Behältnisses anliegt.

Die Blasform weist dabei insbesondere neben dem Bodenteil noch Seitenteile auf, welche ebenfalls das Behältnis begrenzen. Bei dieser Ausführungsform wird vorgeschlagen, dass wenigstens ein Bereich dieser Innenwandung d.h. die Seitenteile und/oder das Bodenteil beheizt werden.

Auf diese Weise wird erreicht, dass der besagte Anspritzpunkt, der üblicherweise bei diesen Kunststoffvorformlingen vorhanden ist, während des Expansionsvorganges leicht in das Innere des entstehenden Behältnisses gedrückt wird. Für den nachfolgenden Abfüllvorgang mit einem heißen Getränk wird erreicht, dass auch bei einer Expansion des Behältnisses der Anspritzpunkt die Bodenfreiheit des Behältnisses nicht mehr mindert, da er bezüglich des Innenraums des Behältnisses nach Innen gedrückt ist.

Bei aus dem Stand der Technik wird üblicherweise der Anspritzpunkt des Vorformlings beim Entstehen der Flasche eine Vertiefung in den Bodenteil bzw. der Bodentasse gedrückt. Damit wird erfindungsgemäß vorgeschlagen, diese Vertiefung in eine Erhöhung bzw. den besagten Vorsprung oder Pin umzuwandeln. Auf diese Weise wird einerseits, wie gesagt, mehr Bodenfreiheit erreicht, andererseits erreicht man verfahrensseitig eine Verfestigung im Bodenzentrum des Behältnisses. Besondere Vorteile ergeben sich insbesondere aus der Kombination mit der Erwärmung der Innenwandung des Kunststoffbehältnisses, da hierdurch eine hohe Stabilität des Behältnisses insbesondere im Bereich des Anspritzpunkts erreicht wird.

Durch diese Vorgehensweise kann eine Verbesserung gegenüber den bisher erreichten Bodenfreiheiten erreicht werden. Bevorzugt ist der besagte Ausbildungsabschnitt des Bodenteils so ausgebildet, dass ein Projektion auf eine beliebige Ebene, welche eine Längsachse der Blasform bzw. des Behältnisses enthält jeweils einen kontinuierlichen bzw. mathematisch gesehen differenzierbaren Verlauf annimmt, mit Ausnahme des genannten zentralen Bereichs, in dem sich der Vorsprung erstreckt.

Bei einer bevorzugten Ausführungsform weist der stangenförmige Körper bzw. Stangenkörper in seinem Inneren einen sich in der Längsrichtung des stangenförmigen Körpers erstreckenden Kanal zum Transport eines gasförmigen Mediums auf. Der stangenförmige Körper, der teilweise auch als Reckstange bezeichnet wird, ist somit bei dieser bevorzugten Ausführungsform als sogenannte Spülstange ausgebildet, welche die Beaufschlagung eines Bodenteils eines Vorformlings mit einem gasförmigen Medium, beispielsweise erwärmter Luft erlaubt. Auch diese Vorgehensweise trägt zur Stabilität des Behältnisses im Bereich des Anspritzpunktes bei.

Bevorzugt weist hierzu die Innenwandung der Blasform Kanäle für den Transport einer Flüssigkeit auf. So kann beispielsweise erwärmtes Öl durch die Innenwandung der Blasform gefördert werden, um diese auf eine vorgegebene Temperatur zu erwärmen. Diese Erwärmung der Blasform bringt Vorteile für den Herstellungsprozess des Behältnisses, aber auch für den anschließenden Abfüllvorgang des Behältnisses mit sich. Insbesondere auch eine Kombination einer derartigen beheizbaren Innenwandung mit dem erwähnten Vorsprung weist, wie oben erwähnt, besondere Vorteile in einer Anlage auf, bei der das so hergestellte Behältnis in einem anschließenden Prozess mit einem heißen Getränk abgefüllt werden soll.

Bei einer weiteren vorteilhaften Ausführungsform weist der besagte Vorsprung eine ebene Oberfläche auf. Dies bedeutet, dass die Oberfläche, welche dem Vorformling bzw. dem Behältnis zugewandt ist, im Wesentlichen eben ausgebildet ist. Dabei kann diese Oberfläche beispielsweise die Gestalt einer ebenen Kreisfläche annehmen. Die Fläche kann jedoch auch abgerundete Seitenränder aufweisen.

Bei einer weiteren vorteilhaften Ausführungsform weist der besagte Vorsprung gegenüber dem Ausbildungsabschnitt in einem Bereich um den Vorsprung eine Höhe auf, die zwischen 0,2mm und 10mm, bevorzugt zwischen 0,4mm und 8mm und besonders bevorzugt zwischen 0,7mm und 1,5mm liegt. Umfangreiche Experimente der Anmelderin an unterschiedlichsten Vorformlingen und Materialien haben gezeigt, dass die genannte Höhe besonders geeignet ist um einerseits das Entstehen des Behältnisses im Bodenbereich nicht über zu strapazieren andererseits jedoch eine genaue zufriedenstellende Expansion des Behältnisses im Rahmen der Heißabfüllung zu erreichen. Vorzugsweise ist die besagte Höhe des Vorsprungs veränderbar.

Die vorliegende Erfindung ist weiterhin auf eine Anlage zum Herstellen mit von Flüssigkeiten befüllten Behältnissen gerichtet, welche eine Vorrichtung der oben beschriebenen Art zur Umformung von Kunststoffvorformlingen zu Kunststoffbehältnissen aufweist, so wie eine in einer Transportrichtung der Behältnisse nach der genannten Vorrichtung angeordnete Befüllungseinheit, welche die Behältnisse mit einer Flüssigkeit befüllt, wobei diese Befüllungseinheit derart gestaltet ist, dass sie die Flüssigkeit in einem erwärmten Zustand in das Behältnis einfüllt. Insbesondere weist die Anlage eine Heizeinrichtung für die abzufüllende Flüssigkeit auf, welche die Flüssigkeit vor deren Eintritt in das Behältnis erwärmt.

Bevorzugt ist die Anlage derart gestaltet, dass die Flüssigkeit mit einer Temperatur eingefüllt wird, welche zwischen 50° und 100°, bevorzugt zwischen 60° und 90° und besonders bevorzugt zwischen 80° und 90° liegt.

Bei einer weiteren vorteilhaften Ausführungsform weist die Befüllungseinheit eine Gaszuführungseinrichtung auf, welche dem Behältnis nach dessen Befüllung mit der Flüssigkeit ein gasförmiges Medium zuführt. Wie oben erwähnt, kann unmittelbar nach der Heißabfüllung des Getränkes noch ein Gas, wie beispielsweise Stickstoff, zugeführt werden und anschließend das Behältnis verschlossen werden. Auf diese Weise können die Effekte ausgeglichen werden, welche durch ein Zusammenziehen der Flüssigkeit entstehen, ohne dass hierbei das Behältnis optisch merklich schrumpft.

Die vorliegende Erfindung ist weiterhin auf ein Verfahren zum Umformen von Kunststoffvorformlingen zu Kunststoffbehältnissen gerichtet, wobei die Kunststoffvorformlinge in einem innerhalb einer Blasform ausgebildeten Hohlraum angeordnet werden und innerhalb dieses Hohlraumes insbesondere durch Expansion gegen eine Innenwandung der Blasform zu Kunststoffbehältnissen ausgebildet werden. Dabei wird dem Kunststoffvorformling zu dessen Expansion während des Umformvorganges mittels einer Einfülleinrichtung ein gasförmiges Medium zugeführt und der Kunststoffvorformling wird dabei auch gegen einen Teil der Innenwandung bildenden Ausbildungsabschnitt des Bodenteils der Blasform zur Ausbildung eines Bodenabschnittes des Behältnisses expandiert. Erfindungsgemäß wird ein zentraler Bereich des Kunststoffvorformlings gegen einen an dem Ausbildungsabschnitt ausgebildeten und sich in Richtung des Hohlraums erstreckenden Vorsprung expandiert und die dem Kunststoffvorformling zugewandete Innenwandung der Blasform wird zur Durchführung des Umformungsvorgangs wenigstens abschnittsweise erwärmt. Insbesondere wird dabei die Seitenwandung der Blasform erwärmt. Eine Erwärmung des Bodenteils ist nicht unbedingt erforderlich, je nach Anwendung kommt sogar eine Abkühlung des Bodenteils in Betracht

Bei einem bevorzugten Verfahren wird der Kunststoffvorformling während des Umformungsvorganges mittels eines stangenförmigen Körpers, der in das Innere des Kunststoffvorformlings eingeführt wird, in seiner Längsrichtung gedehnt. Dabei wird besonders bevorzugt dem Kunststoffbehältnis während des Umformungsvorgangs wenigstens zweitweise durch den stangenförmigen Körper hindurch ein gasförmiges Medium durchgeführt, das heißt auch hier wird besonders bevorzugt eine Spülstange verwendet.

Bei einem weiteren vorteilhaften Verfahren wird in einem ersten Verfahrensschritt ein Kunststoffbehältnis in der oben beschriebenen Art hergestellt und anschließend das Behältnis mit einer Flüssigkeit befüllt, wobei eine Temperatur dieser Flüssigkeit während der Befüllung über 30° Celsius, bevorzugt über 50° Celsius liegt. Besonders vorteilhaft wird dabei diese Flüssigkeit diesem Behältnis (unter Druck) zugeführt oder im Anschluss an die Flüssigkeit dem Behältnis ein Gas zugeführt.

Genauer gesagt wird dem Behältnis nach oder während der Befüllung der Flüssigkeit ein gasförmiges Medium zugeführt und anschließend das Behältnis verschlossen.

Weitere Vorteile und Ausführungsformen ergeben sich aus den beigefügten Figuren:
Darin zeigen:
- Fig. 1a: Eine Teildarstellung eines Behältnisses nach dem Stand der Technik;
- Fig. 1b: ein Detail der in Fig. 1a gezeigten Darstellung;
- Fig. 2: eine Detaildarstellung eines erfindungsgemäßen Behältnisses;
- Fig. 3a: eine schematische Darstellung einer Vorrichtung zum Herstellen von Behältnissen;
- Fig. 3b: eine schematische Darstellung der Vorrichtung aus Fig. 3a mit eingelegtem Behältnis;
- Fig. 4a: eine Detaildarstellung der Vorrichtung aus 3a;
- Fig. 4b: eine Detaildarstellung der Vorrichtung aus Fig. 3b;
- Fig. 5: eine Detaildarstellung des in Fig.4a gezeigten Bereiches D; und
- Fig. 6: eine stark schematische Darstellung einer erfindungsgemäßen Anlage zum Herstellen von mit Getränken befüllten Behältnissen.

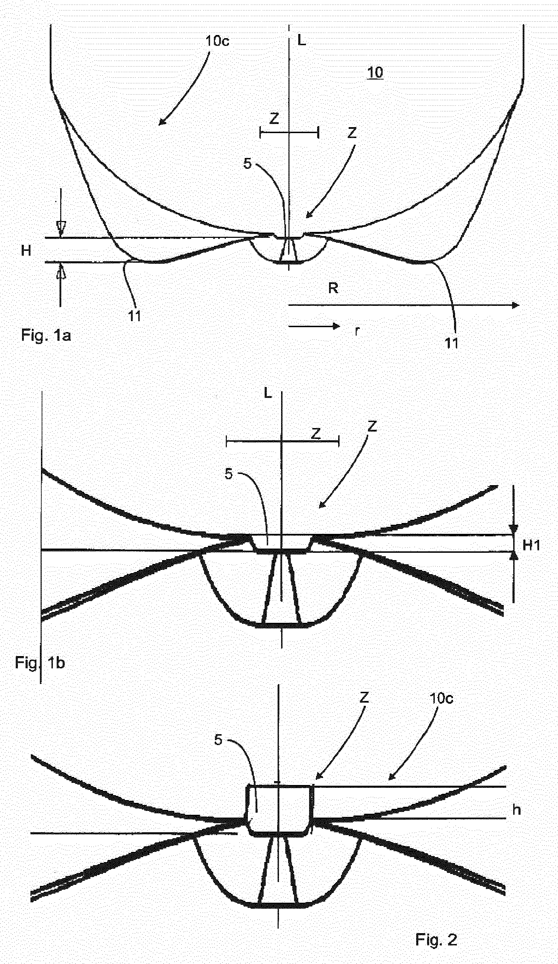

Fig. 1a zeigt eine Teilansicht eines Behältnisses 10, genauer einen Bodenbereich 10c dieses Behältnisses 10. Dieser Bodenbereich 10c weist dabei eine Vielzahl von Standfüßen 11 auf. In einem radial Innen liegenden Bereich dieser Standfüße befindet sich ein Anspritzpunkt 5, der bereits bei den Vorformlingen auftritt, die anschließend zu den in Fig. 1a gezeigten Behältnissen 10 umgeformt werden sollen. Dabei kennzeichnet das Bezugszeichen H einen Höhenunterschied zwischen der Unterseite der Standflächen 11 und der Unterseite dieses Anspritzpunktes 5. Dieser Anspritzpunkt 5 ist dabei in einem insgesamt mit Z bezeichneten Zentralbereichs des Bodens 10c angeordnet. Der Zentralbereich weist dabei einen kreisförmigen Querschnitt auf.

Fig. 1b zeigt ein Detail des in Fig. 1a gezeigten Bodens, genauer gesagt, den zentralen Bereich Z und diesen umgebende Bereiche. Dabei bezieht sich das Bezugszeichen h1 auf die Höhe des Anspritzpunktes gegenüber der eigentlichen Fläche 13 des Bodens.

Falls nun ein entsprechendes Behältnis bei dem Abfüllprozess mit einem Gas beaufschlagt wird und sich ausdehnt, kann dies dazu führen, dass sich der Anspritzpunkt 5 soweit nach unten bewegt, dass die in Fig. 1a gezeigte Höhe H auf 0 reduziert wird oder sogar der Anspritzpunkt nach unten übersteht. Dies führt dazu, dass das Behältnis nicht mehr gerade steht bzw. wackelt.

Bei aus dem Stand der Technik bekannten Verfahren wird beim Umformen bzw. Entstehen des Behältnisses 10 der genannte Anspritzpunkt 5 in eine Bodentasse gedrückt.

Fig. 2 zeigt eine entsprechende Detaildarstellung für ein erfindungsgemäßes Behältnis bzw. dessen Bodenbereich 10c. Man erkennt hier, dass der Anspritzpunkt 5 im Gegensatz zu der in Fig. 2a gezeigten Darstellung um den Bereich h nach oben gedrückt wurde. Dies kann dadurch erreicht werden, indem anstelle der oben genannten Vertiefung in der Bodentasse eine Erhöhung, welche im Folgenden auch als PIN bezeichnet wird, verwendet wird. Auf diese Weise wird einerseits mehr Bodenfreiheit erreicht und andererseits auch verfahrenstechnisch eine Verfestigung im Bodenzentrum Z. Damit kann durch die erfindungsgemäße Neuerung wesentlich mehr Bodenfreiheit für das Behältnis erreicht werden als mit bisher bekannten Verfahren. Besondere Vorteile bringt das genannte Verfahren in Anlagen zur Heißabfüllung von Getränken bzw. auch in Umformungseinrichtungen, bei denen bereits eine Wandung von Blasformen erwärmt wird, da hier die gezeigte Verschiebung des Anspritzpunktes nach oben in besonders vorteilhafter Weise möglich ist.

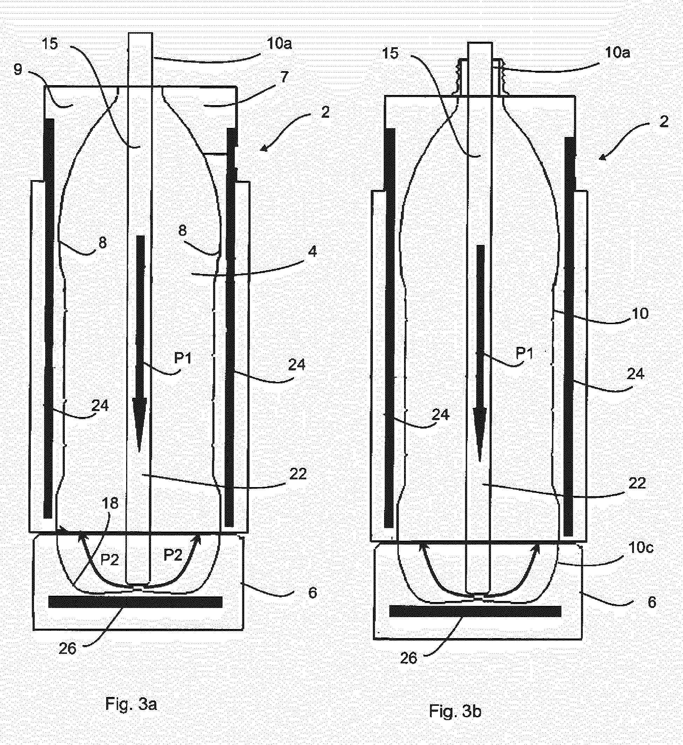

Fig. 3a zeigt eine Darstellung einer erfindungsgemäßen Blasform 2 ohne Behältnis. Dabei weist diese Blasform ein erstes Formteil 7 und ein zweites Formteil 9 auf, welche gegeneinander verschlossen werden können und im Inneren einen Hohlraum 4 ausbilden. Dabei wird dieser Hohlraum 4 durch Innenwandungen 8 der beiden Formteile 7, 9 begrenzt. Nach unten hin wird der Hohlraum durch ein Bodenteil 6 begrenzt, welches ebenfalls eine Innenwandung 18 zur Ausbildung des Bodenbereiches des Behältnisses aufweist. In den beiden Formteilen 7 und 9 sind dabei Heizeinrichtungen 24 angebracht um die Innenwandung 8 jeweils beheizen zu können. Vorzugsweise handelt es sich dabei um Kanäle, durch welche ein insbesondere flüssiges Heizmittel geschickt werden kann. Auch in dem Bodenteil 6 ist eine entsprechende Heizeinrichtung 26 ausgebildet, wobei auch diese Heizeinrichtung 26 durch Kanäle ausgebildet ist, durch welche hindurch ein flüssiges Heizmittel, wie beispielsweise Öl, fließen kann.

Das Bezugszeichen 15 bezieht sich auf einen stangenförmigen Körper zum Strecken eines Behältnisses in dessen Längsrichtung L. Dieser stangenförmige Körper 15 ist hier als Spülstange ausgebildet, was bedeutet, dass entlang des Pfeils P1 ein gasförmiges Medium, wie beispielsweise Luft in den unteren Bereich des Behältnisses bzw. auch der Blasform 2 geleitet werden kann. Dieses gasförmige Medium gelangt anschließend entlang der Pfeile P2 wieder nach oben.

Fig. 3b zeigt eine entsprechende Darstellung mit einem in der Blasform 2 angeordneten Behältnis 10. Dabei ist zu beachten, dass die Innenwandungen 8, 18 das Negativ für die anschließend entstehende Flasche bzw. das Behältnis 10 bilden. Oberhalb der Blasform ist ein Gewinde 10a des Behältnisses 10 sichtbar, welches durch den Expansionsvorgang bewusst nicht tangiert wird.

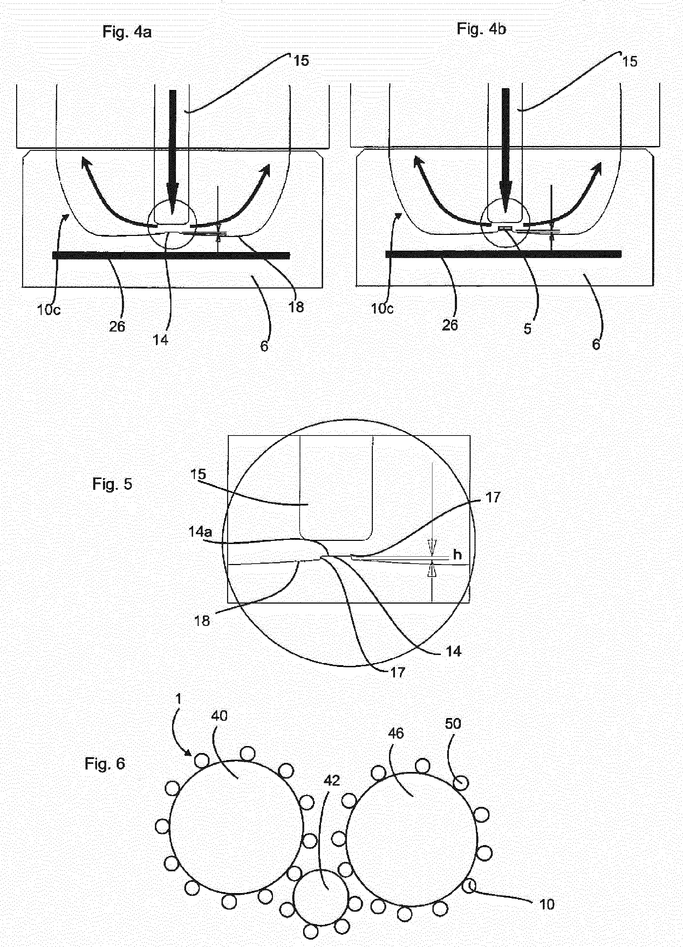

Fig. 4a zeigt eine Detaildarstellung des Bodenbereichs 6 einer erfindungsgemäßen Blasform 2. Man erkennt hier insbesondere auch einen erfindungsgemäßen Vorsprung 14, der gegenüber dem Bodenabschnitt 18 nach oben herausragt. Der Bodenabschnitt 18 ist außerhalb dieses Vorsprungs 14 gekrümmt und insbesondre weist eine entsprechende Krümmung des Bodenabschnitts stets das gleiche Vorzeichen auf.

Fig. 4b zeigt eine entsprechende Darstellung für ein umzuformendes Behältnis. Man erkennt, dass hier der Anspritzpunkt 5 des Behältnisses durch den in Fig. 4a gezeigten Vorsprung 14 nach oben gedrückt wird.

Fig. 5 zeigt eine Detaildarstellung der in Fig. 4a gezeigten Blasform. Man erkennt hier genauer den Vorsprung 14, dessen Oberfläche 14a eben ausgebildet ist, wodurch die Verschiebung des Anspritzpunktes 5 weiter verbessert werden kann. In umfangsreichen Überprüfungen konnte gezeigt werden, dass eine Höhe h dieses Vorsprungs vorteilhaft ist, welche zwischen 1 mm und 10 mm, bevorzugt zwischen 2 mm und 8 mm und besonders bevorzugt zwischen 5 mm und 8 mm liegt. Der Vorsprung 14 ist hier einseitig mit der Innenwandung 18 ausgebildet. Es wäre jedoch auch möglich, den Vorsprung 14 beweglich gegenüber der Innenwandung 18 auszubilden, um so die Höhe h des Vorsprungs 14 verstellbar zu gestalten.

Weiterhin ist zwischen der Innenwandung 18 des Bodenteils 6 und dem Vorsprung 14 ein relativ steiler Übergang 17 vorgesehen. Auf diese Weise wird erreicht, dass selektiv der Bereich, in dem sich der Anspritzpunkt befindet, nach oben gepresst wird.

Fig. 6 zeigt eine stark schematisierte Darstellung einer erfindungsgemäßen Anlage 60 zum Herstellen von Behältnissen. Dabei bezieht sich das Bezugszeichen 40 auf eine Vorrichtung zum Umformen von Vorformlingen zu Behältnissen 10 und insbesondere auf eine Streckblasmaschine. Diese Streckblasmaschine 40 weist eine Vielzahl von Vorrichtungen zum Umformen von Kunststoffvorformlingen zu Kunststoffbehältnissen 10 auf, welche die einzelnen Behältnisse 10 umformen. Dabei ist die Anlage 40 als Rundläuferanlage ausgeführt.

Die in der Anlage 40 hergestellten Behältnisse werden über eine Transporteinrichtung 42, wie ein Sternrad, an eine Abfülleinheit 46 übergeben. Anstelle des in Fig. 6 gezeigten Sternrades könnten jedoch auch andere Transporteinrichtungen, wie beispielsweise Luftförderer und dergleichen, vorgesehen sein. In der Befüllungseinrichtung 46 werden die Behältnisse 10 mit einem flüssigen Getränk befüllt. Dabei wird das Getränk zunächst aufgeheizt und mit einer erhöhten Temperatur eingefüllt.

So wäre es beispielsweise möglich, Heizeinrichtungen in der Art eines Durchlauferhitzers zu verwenden, welche das Getränk erwärmen sowie Einfülleinrichtungen 50 wie Düsenköpfe, welche das Getränk in die Behältnisse 10 einfüllen. Daneben weist die Befüllungsanlage 46 auf eine (nicht gezeigte) Einfülleinrichtung für ein gasförmiges Medium auf, welche nach dem Befüllen mit dem Getränk das besagte gasförmige Medium in die Behältnisse 10 einfüllt. Nach diesem Einfüllvorgang werden die Behältnisse durch eine (nicht gezeigte) Verschließeinrichtung mit Verschlüssen verschlossen. Im Inneren des Behältnisses 10 zieht sich einerseits das eingeführte Getränk in Folge der Abkühlung zusammen, andererseits jedoch dehnt sich auch das eingefüllte Gas aus. Auf diese Weise kann es gleichwohl insgesamt zu einer Volumenerhöhung bzw. Druckerhöhung im Inneren des Behältnisses kommen, welche dazu führt, dass der in Fig. 4b gezeigte Anspritzpunkt geringfügig nach unten gepresst wird. Da jedoch der Anspritzpunkt durch die Blasform 2 zunächst nach oben gedrückt wird, kann auf diese Weise erreicht werden, dass im Ergebnis der Anspritzpunkt nicht die Standsicherheit des so erzeugten und abgefüllten Behältnisses 10 behindert.

Sämtliche in den Anmeldungsunterlagen offenbarten Merkmale werden als erfindungswesentlich beansprucht, sofern sie einzeln oder in Kombination gegenüber dem Stand der Technik neu sind.

## Patentansprüche

1. Vorrichtung zum Umformen von Kunststoffvorformlingen zu Kunststoffbehältnissen (10) mit einer Blasform (2) mit einer dem Kunststoffbehältnis (10) zugewandten Innenwandung (8, 18), welche Blasform (2) einen Hohlraum (4) aufweist, innerhalb dessen ein
Kunststoffvorformling zu einem Kunststoffbehältnis (10) umformbar ist, wobei die Blasform (2) ein Bodenteil (6) zur Ausbildung eines Bodenabschnitts (10c) des
Behältnisses (10) aufweist, wobei dieses Bodenteil (6) den Hohlraum (4) begrenzt, mit einer Einfülleinrichtung, um dem Kunststoffvorformling (10) über seine Mündung ein gasförmiges Medium zuzuführen, um den
Kunststoffvorformling im Inneren der Blasform (2) zu expandieren, mit einem stangenförmigen Körper (15), der gegenüber der Blasform (2) bewegbar ist, um den Kunststoffvorformling (10) während des Umformvorgangs zu dehnen,
**dadurch gekennzeichnet, dass**
das Bodenteil (6) einen den Hohlraum (4) begrenzenden und einen Teil der Innenwandung (8, 18) bildenden Ausbildungsabschnitt (18) aufweist, der zur Ausbildung des Bodenabschnitts (10c) des Behältnisses (10) dient und der an eine Gestalt der Bodenabschnitts (10c) des gefertigten Behältnisses (10) angepasst ist und der Ausbildungsabschnitt (18) in einem zentralen Bereich (Z) einen sich in Richtung des Hohlraums (4) erstreckenden Vorsprung (14) aufweist, wobei die dem Kunsststoffvorformling (10) zugewandte Innenwandung (8, 18) der Blasform (2) wenigstens abschnittsweise beheizbar ist, wobei der Vorsprung (14) gegenüber dem Ausbildungsabschnitt eine Höhe aufweist, die zwischen 0,2mm und 10mm, bevorzugt zwischen 0,4mm und 8mm und besonders bevorzugt zwischen 0.7mm und 1,5 mm liegt.

2. Vorrichtung nach Anspruch 1, **dadurch gekennzeichnet, dass** der Vorsprung (14) derart angeordnet ist, dass er während eines Expansionsvorgangs an einem Anspritzpunkt (5) des Behältnisses (10) anliegt.

3. Vorrichtung nach wenigstens einem der vorangegangenen Ansprüche, **dadurch gekennzeichnet, dass** der stangenförmige Körper (15) in seinem Inneren einen sich in der Längsrichtung des stangenförmigen Körpers (15) erstreckenden Kanal (22) zum Transport eines gasförmgen Mediums aufweist.

4. Vorrichtung nach wenigstens einem der vorangegangenen Ansprüche, **dadurch gekennzeichnet, dass** der Vorsprung (14) eine ebene Oberfläche (14a) aufweist.

5. Anlage zum Herstellen von mit Flüssigkeiten befüllten Behältnissen mit einer Vorrichtung nach wenigstens einem der vorangegangenen Ansprüche und einer in einer Transportrichtung dieser Behältnisse (10) nach der Vorrichtung (1) angeordneten Befüllungseinheit, weiche die Behältnisse (10) mit einer Flüssigkeit befüllt, wobei die Anlage eine Heizeinrichtung für die abzufüllende Flüssigkeit aufweist, welche die Flüssigkeit vor deren Eintritt in das Behältnis (10) beheizt.

6. Anlage nach Anspruch 5, **dadurch gekennzeichnet, dass** die Befüllungseinheit eine Gaszuführungseinrichtung aufweist, welche dem Behältnis nach dessen Befüllung mit der Flüsigkeit ein gasförmiges Medium zuführt.

7. Verfahren zum Umformen von Kunststoffvorformlingen zu Kunststoffbehältnissen (10), wobei die Kunststoffvorformlinge in einem innerhalb einer Blasform (2) ausgebildeten Hohlraum (4) angeordnet werden und innerhalb dieses Hohlraums (4) durch Expansion gegen eine Innenwandung (8, 18) der Blasform zu Kunststoffbehältnissen (10) ausgebildet werden, wobei den Kunststoffvorformlingen während des Umformungsvorgangs mittels einer Einfülleinrichtung ein gasförmiges Medium zugeführt wird und wobei der Kunststoffvorformling auch gegen einen Teil der Innenwandung (8, 18) bildenden Ausbildungsabschnitt (18) der Blasform (2) zur Ausbildung eines Bodenabschnitts (10c) des Behältnisses (10) expandiert wird,
**dadurch gekennzeichnet, dass**
die dem Kunststoffvorformling (10) zugewandte Innenwandung (8, 18) der Blasform (2) wenigstens abschnittsweise zur Durchführung des Umformungsvorgangs erwärmt wird und ein zentraler Bereich des Kunststoffvorformlings gegen einen an dem Ausbildungsabschnitt (18) ausgebildeten und sich in Richtung des Hohlraums (4) erstreckenden Vorsprung (14) expandiert wird, wobei der Vorsprung (14) gegenüber dem Ausbildungsabschnitt eine Höhe aufweist, die zwischen 0,2mm und 10mm, bevorzugt zwischen 0,4mm und 8mm und besonders bevorzugt zwischen 0.7mm und 1,5 mm liegt.

8. Verfahren nach Anspruch 7, **dadurch gekennzeichnet, dass** der Kunststoffvorformling wahrend des Umformungsvorgangs mittels eines stangenförmigen Körpers (15) in seiner Längsrichtung (L) gedehnt wird.

9. Verfahren nach Anspruch 8, **dadurch gekennzeichnet, dass** dem Kunststoffbehältnis (10) während des Umformungsvorgangs wenigstens zeitweise durch den stangenförmigen Körper hindurch ein gasförmiges Medium zugeführt wird.

10. Verfahren zum Herstellen von mit Flüssigkeiten befullten Behältnissen, **dadurch gekennzeichnet, dass** in einem ersten Verfahrensschritt ein
Kunststoffbehältnis (10) nach wenigstens einem der vorangegangenen Ansprüche 7 - 9 hergestellt wird und anschließend das Behältnis (10) mit einer Flüssigkeit befullt wird, wobei eine Temperatur dieser Flüssigkeit während der Befüllung über 30° C, bevorzugt über 60°C liegt.

11. Verfahren nach Anspruch 10, **dadurch gekennzeichnet, dass** dem Behältnis (10) nach der Befüllung mit der Flüssigkeit ein gasförmiges Medium zugeführt wird und anschließend das Behältnis (10) verschlossen wird.
